# EUROPÄISCHE PATENTSCHRIFT

(11) **EP 2 381 239 B1**
(45) Veröffentlichungstag und Bekanntmachung des Hinweises auf die Patenterteilung: **23.05.2018**
(21) Anmeldenummer: 11163113.1
(22) Anmeldetag: 20.04.2011
(51) Int. Cl.: G01N 17/00

(54) **Korrosionsprüfgerät**
Corrosion inspection device
Appareil de contrôle de la corrosion

(30) Priorität: 22.04.2010 DE 202010005278 U
(43) Veröffentlichungstag der Anmeldung: 26.10.2011
(73) Patentinhaber: Weiss Umwelttechnik GmbH, 35447 Reiskirchen (DE)
(72) Erfinder: Steyh, Roland, 35305 Grünberg (DE)
(74) Vertreter: Stoffregen, Hans-Herbert

(56) Entgegenhaltungen:
- EP-A2- 1 422 507
- DE-A1- 4 406 145
- DE-A1- 10 155 245
- DE-A1- 19 915 906
- DE-A1-102004 042 001
- GB-A- 1 361 426
- GB-A- 2 056 694
- US-A- 3 718 437
- US-A- 3 862 700
- US-A- 4 923 816
- US-B1- 6 487 866

## Beschreibung

Die Erfindung bezieht sich auf ein Korrosionsprüfgerät umfassend eine thermisch isolierende Außenumhüllende mit Umfangswandungen, Boden- und Deckenwandung und eine von dieser umgebenen den Innenraum des Korrosionsprüfgeräts umschließenden Innenumhüllende aus einem korrosionsbeständigen Material.

Um reproduzierbare Korrosionsergebnisse an z. B. Komponenten von Kraftfahrzeugen zu erzielen, werden diese Korrosions-Wechseltests ausgesetzt, die in sogenannten Korrosionsprüfgeräten durchgeführt werden, die auch vereinfacht als Korrosionsprüfkammern bezeichnet werden. Diese bestehen aus einem Gehäuse in Sandwichstruktur, wobei eine aus Blech bestehende Außenschicht über ein isolierendes Material, z. B. PU-Schaum, mit einer aus Kunststoff bestehenden Innenschicht verbunden ist. Eine diesbezügliche Konstruktion hat sich bewährt, sofern die Temperaturdifferenzen zwischen dem von der Prüfkammer umgebenen Innenraum und der Umgebungstemperatur nicht zu groß sind.

Bei hohen Temperaturdifferenzen oder großen Abmessungen der Prüfkammer wird eine Innenschicht aus austenitischem Stahl verwendet. Bei den die Realität abbildenden Korrosionsprüfungen ist die Prüfkammer jedoch auf Temperaturen einzustellen, die im Bereich zwischen -40 °C und +70 °C liegen und bei denen Salzsprühnebel-, Kondensat- und Klimaphasentestläufe zyklisch aufeinander folgen.

Bei entsprechenden großen Temperaturdifferenzen zur Umgebung zeigen sich aufgrund der unterschiedlichen Wärmeausdehnungskoeffizienten zwischen Innen- und Außenschicht und der festen Verbindung zwischen diesen über die PU-Innenschicht Verwerfungen oder Ablösungen der Innenschicht, die sich insbesondere bei Korrosionsprüfkammern mit großen Volumina bemerkbar machen, in denen z. B. Kraftfahrzeuge oder Fahrzeugkomponenten getestet werden.

Die DE-C-198 17 372 bezieht sich auf einen Klimaschrank mit einem Innenkessel und einem zu diesem beabstandet verlaufenden Außenkessel, wobei Innen- und Außenkessel eine gemeinsame Decke aufweisen und die Seitenwände des Innenkessels mit den Seitenwänden des Außenkessels verbunden sind. Eine gleiche Konstruktion ergibt sich aus der DE-C-44 06 145.

Aus der DE-A-199 15 906 ist eine Korrosionsprüfvorrichtung mit einer Gehäusedecke bekannt, die als Doppelschale ausgebildet ist. Bodenwanne und Seitenwände sind mit einer Isolierung versehen und bestehen aus Kunststoffplatten.

Eine Vorrichtung und ein Verfahren zum Betauen eines Prüflings wird in der DE-A-102 52 561 beschrieben. Dabei wird ein Prüfbehälter, der einen Prüfraum umgibt, in beliebiger Weise in einem Klimaraum angeordnet, der von einem Gehäuse umgeben ist. Der Prüfraum kann mit einer Luftzuführleitung verbunden werden, die das Gehäuse durchsetzt.

Aus der GB-A-20 56 694 ist eine Klimakammer bekannt, die aus einem inneren Container und einem thermisch isolierten Außencontainer besteht. Der innere Container ist beabstandet zur Innenwandung des Außencontainers angeordnet.

Ein Prüfschrank nach der US-B-6,360,621 weist eine Außenumhüllende sowie einen gegenüber dieser isolierten Prüfraum auf.

Eine Klimatisierungsvorrichtung ist der US-A-2009/314107 zu entnehmen, die ein inneres Gehäuse und ein äußeres Gehäuse umfasst, die zueinander beabstandet sind. Das innere Gehäuse weist eine Prüfkammer auf, in der Proben einem Druck ausgesetzt werden. Das innere Gehäuse ist über einen Bock mit dem Außengehäuse mittels Befestigungsmitteln verbunden.

Gegenstand der US-A-4,923,816 ist ein Begasungs-Brutschrank, bei dem ein Innengehäuse beabstandet zu einem äußeren Gehäuse angeordnet ist. Die Verbindung erfolgt im Bereich einer Türöffnung.

Die US-A-3,862,700 bezieht sich auf einen Tieftemperaturtank, der eine aus Kunststoff bestehende Innenverkleidung aufweist.

Aus der DE-A-199 15 906 ist eine Korrosionsprüfvorrichtung bekannt, bei der ein Innengehäuse mit einem Außengehäuse über eine Isolierung verbunden ist.

Um Witterungsbedingungen zu simulieren, wird nach der DE-A-101 55 245 eine doppelwandige Bewitterungskammer vorgeschlagen.

Die EP-A-1 422 507 bezieht sich auf eine Kammer zur Messung von Verdunstungs- bzw. Verdampfungsemissionen.

Aus der GB-A-2 056 694 ist eine Klimakammer bekannt, die aus einem inneren Container und einem thermisch isolierten Außencontainer besteht.

Bei einem Laborkühlschrank nach der DE-A-44 06 145 ist ein Innenraum gegenüber einem Außenraum thermisch isoliert, wobei Innen- und Außenraum gemeinsame Wandungen aufweisen.

Aus der US-A-3,718,437 ist ein Kalorimeter bekannt, bei dem ein Innenraum über Abstützelemente gegenüber einem Außenraum beabstandet ist.

Ein Speicherbehälter für kryogene Flüssigkeiten nach der DE-A-10 2004 042 001 weist einen Innen- und Außenbehälter auf, die in vier Punkten über Halteeinrichtungen verbunden sind.

Nach der US-B-6,487,866 ist ein inneres Gehäuse beabstandet zu den Innenwandungen einer Vakuumkammer angeordnet, um eine thermische Isolierung zu erzielen. Das innere Gehäuse ist in dem Außengehäuse hängend angeordnet. Um in das Innengehäuse zu prüfende Elemente einzubringen, ist eine das Außengehäuse durchsetzende Verbindung vorgesehen.

Ein Tieftemperaturbehälter nach der GB-A-1 361 426 weist ein Innen- und ein Außengehäuse auf, die gegeneinander abgestützt sind.

Der vorliegenden Erfindung liegt die Aufgabe zu Grunde, ein Korrosionsprüfgerät der eingangs genannten Art so weiterzubilden, dass ein Verzug, Verwerfungen oder Ablösungen von Bereichen der den Prüfraum begrenzenden Wandungen, also Decke, Boden und Umfangswandungen auch dann unterbleiben, wenn hohe Temperaturdifferenzen zwischen Innenraum und Umgebung auftreten. Nach einem weiteren Aspekt soll eine hinreichend stabile Bodenfläche zur Verfügung gestellt werden, wobei temperaturbedingte Ausdehnungen zu Verformungen des Bodens auch dann nicht führen sollen, wenn dieser aus Plattenelementen zusammengesetzt ist.

Zur Lösung der Aufgabe sieht die Erfindung im Wesentlichen vor, dass die Außenumhüllende als ein Außengehäuse ausgebildet ist, in das ein die Innenumhüllende bildendes Innengehäuse schwimmend eingebracht ist, das mit einer ersten Umfangswandung des Außengehäuses bei ansonsten freier Beweglichkeit sowohl zu den verbleibenden Umfangswandungen als auch der Boden- und der Deckenwandung des Außengehäuses verbunden ist, dass das Innengehäuse über seine Bodenwandung auf zueinander über Zwischenräume beabstandete und bodenseitig verlaufende plattenförmige Distanzelemente abgestützt ist, und dass die Bodenwandung des Innengehäuses aus über abgewinkelte Längs- und/oder Querränder verbundenen Plattenelementen besteht, wobei sich die abgewinkelten Längs- und/oder Querränder innerhalb der Zwischenräume zwischen Distanzelementen erstrecken.

Erfindungsgemäß wird das Korrosionsprüfgerät in zwei Gehäuse aufgeteilt, und zwar in das Außen- und das Innengehäuse, wobei das Innengehäuse beweglich zu dem Außengehäuse angeordnet ist und es somit aufgrund materialbedingter unterschiedlicher Ausdehnungen zu Verwerfungen oder sonstigen mechanischen und ggf. zu Beschädigungen führenden Beanspruchungen nicht kommen kann.

Aufgrund der erfindungsgemäßen Lehre können Korrosionsprüfgeräte zur Verfügung gestellt werden, die große Abmessungen bzgl. des Prüfraums aufweisen sowie hohe Temperaturdifferenzen zwischen Innenraum und Umgebung zulassen. Ungeachtet dessen ist sichergestellt, dass das Innengehäuse Verwerfungen nicht unterliegt, da sich dieses zu dem Außengehäuse bewegen kann.
Das Innengehäuse besteht aus einem korrosionsbeständigen Material, wobei Kunststoffe zu bevorzugen sind. Somit können korrosiv wirkende Medien wie NaCl-Lösungen in dem Prüfraum versprüht werden, ohne dass ungewollte und unerwünschte Korrosionen an der Prüfeinrichtung auftreten können. Unabhängig hiervor erfolgt ein hinreichende thermische Isolierung, da das Außengehäuse innenseitig mit einer geeigneten Isolierung wie PU-Schaum versehen ist, die mit der aus Blechen bestehenden Außenschicht des Außengehäuses verbunden ist. Das korrosionsbeständige Innengehäuse wird von der thermischen Isolierung gelöst. Somit kann der Prüfraum von dem aus Kunststoff bestehenden Innengehäuse umgeben werden, das bzgl. korrosiver Wechselwirkungen auf das Prüfgut über jeden Zweifel erhaben ist. Verformungen treten ungeachtet der deutlich größeren Wärmeausdehnung des Kunststoffs im Vergleich zu Metallen durch die schwimmende Lagerung des separaten Innengehäuses nicht auf.
Das Innengehäuse ist bevorzugterweise aus aus Kunststoff bestehenden Plattenelementen zusammengesetzt. Diese weisen bevorzugterweise einen abgekanteten Rand auf, wobei aneinander stoßende Platten über die Ränder miteinander verbunden sind. Diese weisen bei zusammengesetzten Platten in Bezug auf den Innenraum der Prüfkammer nach außen. Vorzugsweise weisen die Platten sowohl an den Längs- als auch an den Querrändern Abwinklungen auf.

Auch besteht die Möglichkeit, dass die Platten untereinander verschweißt sind.

Die Platten, die Stärken zwischen 3 mm und 7 mm aufweisen können, sind relativ flexibel. Um die Steifigkeit zu erhöhen, sind außenseitig in die Platten Verstärkungsprofile vorzugsweise einlaminiert, wobei es sich insbesondere um L-förmige oder WinkelProfile handelt. Diese können gleichfalls aus Kunststoff wie GFK bestehen.

Damit die die Bodenwandung bildenden Plattenelemente flächig abgestützt sind, um große Lasten aufnehmen zu können, gleichzeitig jedoch sichergestellt ist, dass bei einer Längenveränderung die nach außen abgewinkelten Ränder der Längenänderung ungehindert folgen können, ist vorgesehen, dass das Innengehäuse auf zueinander über Zwischenräume beabstandete und bodenseitig verlaufende plattenförmige Distanzelemente abgestützt ist. Hierbei handelt es sich insbesondere um plattenquaderförmige Distanzelemente aus Kunststoff, insbesondere aus Polyurethanharzschaum.

Die Abstände zwischen den Distanzelementen und somit die Ausbildung der Zwischenräume ist derart gewählt, dass in diese die abgewinkelten und miteinander verbundenen Ränder der Plattenelemente eingreifen, wobei die Breite der Zwischenräume sicherstellt, dass beim gleitenden Verschieben der Plattenelemente auf den Distanzelementen die abgewinkelten Ränder nicht an die Distanzelemente anstoßen.

Selbstverständlich wird die Erfindung nicht verlassen, wenn die Distanzelemente mit den die Bodenwandung bildenden Plattenelementen verbunden sind, so dass ein gleitendes Abstützen der Distanzelemente auf der Bodenwandung des Außengehäuses erfolgt.

Weist das Außengehäuse eine Quaderform auf, so kann das Innengehäuse deckenseitig spitzdachförmig ausgebildet sein, wodurch sichergestellt ist, dass von der Decke Kondensat nicht herabtropfen kann. Vielmehr wird Kondensat entlang der schräg verlaufenden Innenflächen der die Deckenwandung bildenden Plattenelemente geführt.

Des Weiteren sieht die Erfindung vor, dass das Innengehäuse deckenseitig über Deckenabhängungen wie z. B. Gewindestangen mit der Deckenwandung des Außengehäuses verbunden ist, so dass die erforderliche Stabilität gegeben ist.

Dabei sind die Deckenabhängungen in einem Umfang flexibel, dass der Bewegung des Innengehäuses gefolgt werden kann. Die Deckenabhängungen sind dabei bevorzugt mit den an der Außenfläche der Deckenwandung des Innengehäuses befindlichen Abwinklungen der Patten verbunden.

Der Zwischenraum zwischen dem Innen- und Außengehäuse kann mit getrockneter Luft beaufschlagt sein, um das Entstehen von Tauwasser zu vermeiden.

Die der ersten Umfangswandung gegenüberliegende Umfangswandung sowohl des Außengehäuses als auch des Innengehäuses können zueinander fluchtend angeordnete und verschließbare Durchtrittsöffnungen aufweisen, um z.B. Versorgungsleitungen hindurchzuführen. Da die Öffnungen auf einer Geraden liegen, die in Richtung der Längsbewegung des Innengehäuses zu dem Außengehäuse verläuft, kann zwischen den Öffnungen des Innen- und Außengehäuses eine Scherwirkung nicht auftreten.

Die erste Umfangswandung des Außengehäuses, über die das Innengehäuse mit dem Außengehäuse verbunden ist, sowie die entlang dieser verlaufenden Umfangswandung des Innengehäuses sollten zueinander fluchtende Öffnungen aufweisen, die durch ein Türelement verschließbar sind.

Zum Verbinden des Innengehäuses mit dem Außengehäuse ist sodann bevorzugterweise vorgesehen, dass Abkantungen des Innengehäuses sich innerhalb der Laibung des Außengehäuses erstrecken, um sodann in die Öffnung einen insbesondere aus Kunststoff bestehenden Winkelprofilrahmen einzusetzen, zwischen dem und dem Außengehäuse die Abkantungen verlaufen.

Die das Innengehäuse bildenden Platten, deren Verstärkungsprofile sowie der Winkelprofilrahmen, über den das Innengehäuse mit dem Außengehäuse verbunden ist, sollten insbesondere aus glasfaserverstärktem Kunststoff bestehen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: einen Längsschnitt durch ein Korrosionsprüfgerät und
- Fig. 2: einen Querschnitt durch das Korrosionsprüfgerät gemäß Fig. 1.

Den Fig. ist in Schnittdarstellungen ein Korrosionsprüfgerät 10 zu entnehmen, in dem insbesondere Tests durchgeführt werden, um reproduzierbare praxiskonforme Korrosionsergebnisse z. B. an Lackverletzungen und in geflantschten Bereichen z.B. von Kraftfahrzeugen zu erzielen, ohne dass hierdurch eine Einschränkung der erfindungsgemäßen Lehre erfolgen soll.

Bei entsprechenden Tests wird das zu prüfende Objekt wie Fahrzeug verschiedenen Zyklen von Beanspruchungen ausgesetzt, zu denen z. B. ein Salzsprühnebelzyklus, ein Klimazyklus und ein Kältezyklus gehören können. Die einzelnen Zyklen werden bei unterschiedlichen Temperaturen durchgeführt, die zwischen minus 40 °C und plus 70 °C liegen können. Somit können erhebliche Temperaturdifferenzen zwischen Prüfraum und Umgebung auftreten.

Um den Innen- oder Prüfraum 15 des Prüfgeräts 10 in hinreichendem Umfang gegenüber der Umgebung zu isolieren, gleichzeitig jedoch sicherzustellen, dass aufgrund der Temperaturänderungen Verformungen, Beschädigungen oder ähnliches nicht auftreten, ist folgende Konstruktion gewählt.

Das Korrosionsprüfgerät 10 umfasst ein quaderförmiges Außengehäuse 12 und ein Innengehäuse 14, das gegenüber dem Außengehäuse 12 schwimmend gelagert bzw. abgestützt ist. Das Innengehäuse 14 umschließt den Prüfraum 15.

Somit bildet das Außengehäuse 12 eine Außenumhüllende und das Innengehäuse 14 eine Innenumhüllende des Prüfgeräts 10.

Das Außengehäuse 12 setzt sich aus einer Bodenwandung 16, Seitenwandungen 18, 20, 22 und 26 und einer Kopfwandung 28 zusammen. Die Wandungen 16, 18, 20, 22, 26, 28 weisen eine Sandwichstruktur auf und bestehen im Ausführungsbeispiel aus einer aus Blech bestehenden Außenschicht 30, die mit einer aus Blech bestehenden Innenschicht über eine PU-Schaumschicht 34 oder einer aus einem anderen geeigneten Material bestehenden Schicht verbunden ist. Des Weiteren befindet sich im Ausführungsbeispiel in einer als erste Umfangswandung bezeichneten Seitenwandung 22 eine Öffnung 37, die von einer Tür verschließbar ist. Selbstverständlich können sich auch in anderen Wänden Türe oder Tore befinden.

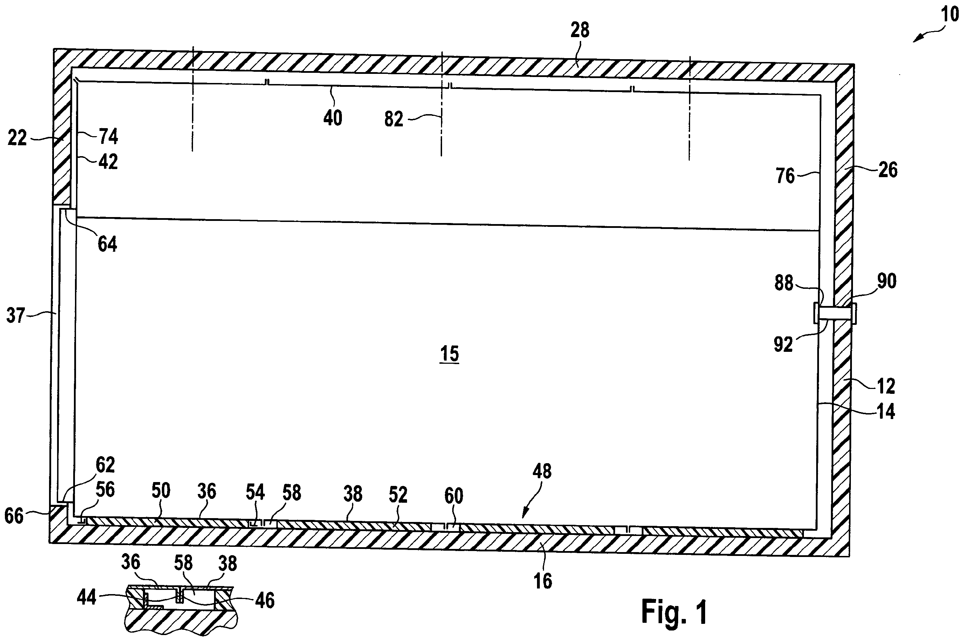

Das Innengehäuse 14 besteht aus aus Kunststoff, insbesondere glasfaserverstärktem Kunststoff bestehenden Platten 36, 38, 40, 42, die in Bezug auf den von dem Innengehäuse 14 ausgehenden Innen- oder Prüfraum 15 nach außen abgewinkelte Ränder 44, 46 aufweisen, wie die Detaildarstellung in Fig. 1 verdeutlicht. Die Platten 36, 38, 40, 42 sind sodann über die nach außen abgewinkelten Ränder 44, 46 miteinander verbunden. Somit ergeben sich innraumseitig glatte Flächen.

Die aus den Plattenelementen 36, 38 zusammengesetzte Bodenwandung 48 des Innengehäuses 14 ist flächig auf plattenförmige Distanzelemente 50, 52 abgestützt, die ihrerseits auf der Bodenwandung 16 des Außengehäuses 12 angeordnet sind. Eine Fixierung der vorzugsweise aus PU bestehenden Distanzplatten 50, 52 kann über Winkelprofile 54, 56 erfolgen, die mit der Bodenwandung 16 oder dem Boden des Innengehäuses 14 verbunden sind.

Wie die Fig. 1 verdeutlicht, sind die Distanzplatten 50, 52 derart zueinander ausgerichtet, dass zwischen diesen jeweils ein Zwischenraum 58, 60 entsteht, innerhalb dessen sich die nach außen abgewinkelten und miteinander verbundene Ränder 44, 46 der Plattenelemente 36, 38 erstrecken.

Dabei ist die Breite der Zwischenräume 58, 60 derart ausgelegt, dass unabhängig von der herrschenden Temperatur und damit Verschiebung des Innengehäuses 14 zu dem Außengehäuse 12 die abgewinkelten Ränder 44, 46 beabstandet zu den Distanzplatten 50, 52 verlaufen.

Ferner ergibt sich aus der Fig. 1, dass das Innengehäuse 14 mit dem Außengehäuse 12 einzig und allein im Bereich einer Wandung, und zwar im Ausführungsbeispiel mit der die Öffnung 37 aufweisenden ersten Umfangswandung 22 verbunden ist. Hierzu sind die an der Umfangswandung 22 angrenzenden Plattenelemente 36, 42 randseitig derart abgekantet, dass diese mit Abschnitten 62, 64 innerhalb der Laibung 66 der die nicht dargestellte Tür aufnehmenden Öffnung 37 verlaufen.

Sodann wird ein nicht dargestellter vorzugsweise ebenfalls aus Kunststoff wie GFK bestehender Winkelprofilrahmen eingesetzt, zwischen dem und der Laibung 66 die Abkantungen 62, 64 verlaufen, um sodann die Abkantungen 62, 64 mit dem Winkelprofilrahmen bzw. der Laibung 66 zu fixieren.

Selbstverständlich wird die Erfindung auch dann nicht verlassen, wenn eine andere Art oder ein anderer Ort der Fixierung erfolgt.

Das aus Kunststoff wie GFK bestehende Innengehäuse 14 weist gegenüber dem Außengehäuse 12 einen größeren Ausdehnungskoeffizienten auf, so dass unter Berücksichtigung der Dimensionierung des von dem Außengehäuse 12 umgebenen Innenraums zu dem Innengehäuse 14 dieses zu dem Außengehäuse 12 bewegt werden kann, ohne dass Verwindungen, Stauchungen oder ähnliches auftreten.

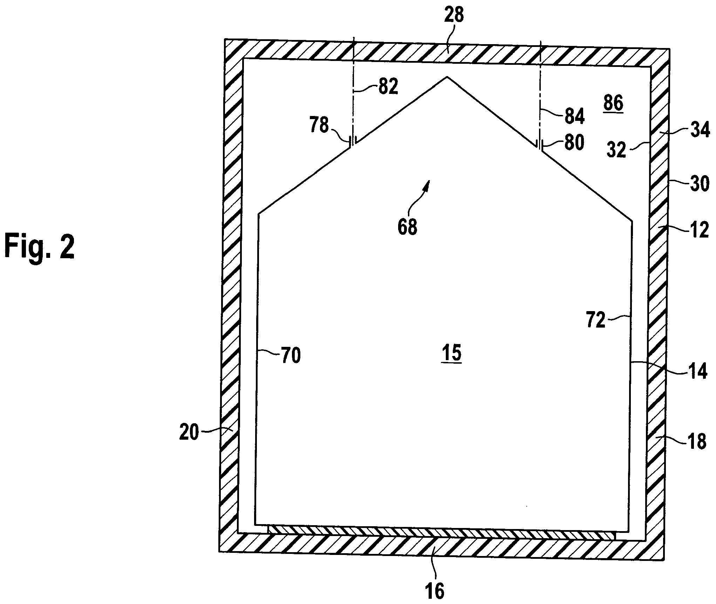

Des Weiteren ergibt sich aus der Schnittdarstellung gemäß Fig. 2, dass das Innengehäuse 14 ein als Spitzdach ausgebildetes Dach 68 aufweist. Hierdurch ist sichergestellt, dass dann, wenn sich an den Innenseiten des Daches 68 Kondensat abscheidet, dieses nicht herabtropft, sondern entlang der Innenseite fließt, um sodann über die Innenseiten der Umfangswandungen 70, 72, 74, 76 des Innengehäuses 14 zum Boden hin zu fließen.

Um dem Innengehäuse 14 ungeachtet der Tatsache, dass dieses aus Kunststoff- wie GFK-Platten, deren Dicke zwischen 3 mm und 7 mm liegen kann, zusammengesetzt ist, eine hinreichende Steifigkeit zu verleihen, sollten von den Außenflächen der Umfangswandungen 70, 72, 74, 76 Verstärkungsprofile abragen, die in die Platten der Umfangswandungen 70, 72, 74, 76 einlaminiert sind.

Auch das Dach 68 ist aus Platten zusammengesetzt, die über nach außen gerichtete Abwinklungen 78, 80 miteinander verbunden sind. Diese dienen gleichzeitig als Befestigung für Deckenabhängungen 82, 84, über die das Innengehäuse 14 mit der Deckenwandung 28 des Außengehäuses verbunden ist. Die Deckenabhängungen 82, 84 können Gewindestangen sein, um eine gewünschte Flexibilität sicherzustellen, so dass eine Bewegung des Innengehäuses 14 zu dem Außengehäuse 12 nicht behindert wird.

Ungeachtet dessen können in die die Decke 68 bildenden Plattenelemente gleichfalls Verstärkungsprofile einlaminiert sein.

Der zwischen dem Innengehäuse 14 und dem Außengehäuse 12 vorhandene Zwischenraum 86 kann mit temperierter Luft, getrockneter Luft und/oder Druckluft beaufschlagt werden, um insbesondere das Entstehen von Tauwasser zu vermeiden.

Um in den Prüfraum 15 Versorgungsleitungen oder sonstige Leitungen einzuführen, sind in den der Öffnung gegenüberliegenden Wandungen 26, 76 des Außengehäuses 12 und des Innengehäuses 14 zueinander fluchtende Öffnungen 88, 90 vorhanden, die verschließbar sind. Die Öffnungen 88, 90 können sodann von einer Hülse 92 durchsetzt sein, die als Führung für Leitungen wie Kabel oder ähnliches dient.

Da die Löcher 88, 90 und damit die Hülse 92 in Längsrichtung des Innengehäuses 14 und gegenüberliegend zu der Verbindung zwischen dem Innengehäuse 14 und dem Außengehäuse 12 verläuft, können Scherkräfte bei einer Bewegung des Innengehäuses 14 zum Außengehäuse 12 nicht auftreten.

## Patentansprüche

1. Korrosionsprüfgerät (10), umfassend eine thermisch isolierende Außenumhüllende mit Umfangswandungen (18, 20, 22, 26), Boden- und Deckenwandung (16, 28) und eine von dieser umgebenen den Innenraum (15) des Korrosionsprüfgeräts umschließenden Innenumhüllende (14) aus einem korrosionsbeständigen Material, wobei die Außenumhüllende als ein Außengehäuse (12) ausgebildet ist, in das ein die Innenumhüllende bildendes Innengehäuse (14) schwimmend eingebracht ist, das mit einer ersten Umfangswandung (22) des Außengehäuses (12) bei ansonsten freier Beweglichkeit sowohl zu den verbleibenden Umfangswandungen (18, 20, 26) als auch der Boden- und der Deckenwandung (16, 28) des Außengehäuses verbunden ist, das Innengehäuse (14) über seine Bodenwandung (48) auf zueinander über Zwischenräume (58, 60) beabstandete und bodenseitig verlaufende plattenförmige Distanzelemente (50, 52) abgestützt ist, und die Bodenwandung (48) des Innengehäuses (14) aus über abgewinkelte Längs- und/oder Querränder (44, 46) verbundenen Plattenelementen (36, 38) besteht, wobei sich die abgewinkelten Längs- und/oder Querränder innerhalb der Zwischenräume (58, 60) zwischen Distanzelementen (50, 52) erstrecken.

2. Korrosionsprüfgerät nach Anspruch 1,
**dadurch gekennzeichnet,**
**dass** das Innengehäuse (14) aus Kunststoff, wie aus GFK bestehenden Plattenelementen (36, 38, 40, 42), besteht.

3. Korrosionsprüfgerät nach Anspruch 1,
**dadurch gekennzeichnet,**
**dass** die Distanzelemente (50, 52) aus Kunststoff, insbesondere aus Polyurethan-Hartschaum, bestehen.

4. Korrosionsprüfgerät nach zumindest Anspruch 3,
**dadurch gekennzeichnet,**
**dass** die Distanzelemente (50, 52) über mit der Bodenwandung (16) des Außengehäuses (12) oder Innengehäuses (14) verbundene Halteprofile (54, 56) wie Winkelprofile fixiert sind.

5. Korrosionsprüfgerät nach einem der vorhergehenden Ansprüche,
**dadurch gekennzeichnet,**
**dass** die Bodenwandung (48) rauminnenseitig als eine ebene Fläche ausgebildet ist.

6. Korrosionsprüfgerät nach einem der vorhergehenden Ansprüche,
**dadurch gekennzeichnet,**
**dass** das Innengehäuse (14) deckenseitig über Deckenabhängungen (82, 84), z.B. Gewindestangen, mit der Deckenwandung (28) des vorzugsweise eine quaderform aufweisenden Außengehäuses (12) verbunden ist, wobei insbesondere die Deckenabhängungen (82, 84) mit nach außen gerichteten Abwinklungen der die Deckenwandung (68) des Innengehäuses (14) bildenden Plattenelemente verbunden sind.

7. Korrosionsprüfgerät nach einem der vorhergehenden Ansprüche,
**dadurch gekennzeichnet,**
**dass** der Zwischenraum (86) zwischen Außen- und Innengehäuse (12, 14) mit Luft ausgefüllt ist, insbesondere mit getrockneter Luft oder Druckluft beaufschlagt ist.

8. Korrosionsprüfgerät nach einem der vorhergehenden Ansprüche,
**dadurch gekennzeichnet,**
**dass** die der ersten Umfangswandung (22) gegenüberliegende Umfangswandung (26, 70) sowohl des Außengehäuses (12) als auch des Innengehäuses (14) zueinander fluchtend angeordnete und verschließbare Durchtrittsöffnungen (88, 90) aufweisen.

9. Korrosionsprüfgerät nach einem der vorhergehenden Ansprüche,
**dadurch gekennzeichnet,**
**dass** die erste Umfangswandung (22) des Außengehäuses (12) und die entlang dieser verlaufende Umfangswandung (74) des Innengehäuses (14) zueinander fluchtende Öffnungen (37) aufweisen, die über ein Türelement verschließbar sind.

10. Korrosionsprüfgerät nach Anspruch 2,
**dadurch gekennzeichnet,**
**dass** zumindest die die Umfangswandungen (70, 72, 74, 76) und gegebenenfalls die die Decke (28) bildenden und aus Kunststoff bestehenden Plattenelemente (40, 42) über deren Außenflächen vorstehende Verstärkungsprofile aufweisen, die vorzugsweise Winkelprofile sind.

11. Korrosionsprüfgerät nach Anspruch 2,
**dadurch gekennzeichnet,**
**dass** die aus Kunststoff bestehenden Plattenelemente (36, 38, 40, 42) eine Dicke d mit 3 mm ≤ d ≤ 7 mm aufweisen.

12. Korrosionsprüfgerät nach Anspruch 9,
**dadurch gekennzeichnet,**
**dass** das Innengehäuse (14) mit dem Außengehäuse (12) über dessen die Öffnung (37) in der ersten Umfangswandung (22) umgebenden Innenrand (66) verbunden ist.

13. Korrosionsprüfgerät nach Anspruch 12,
**dadurch gekennzeichnet,**
**dass** die an der Öffnung (37) angrenzenden Plattenelemente (36, 42) des Innengehäuses (14) Abkantungen (62, 64) aufweisen, die entlang des eine Laibung bildenden Innenrands (66) der ersten Umfangswandung (22) des Außengehäuses (12) verlaufen.

14. Korrosionsprüfgerät nach Anspruch 13,
**dadurch gekennzeichnet,**
**dass** die Abkantungen zwischen einem in die Laibung eingesetzten Winkelprofilrahmen und der Laibung verlaufen und mit diesen verbunden sind.

## Claims

1. Corrosion tester (10), comprising a thermally insulating outer envelope with side panels (18, 20, 22, 26), bottom and top panels (16, 28) and an inner envelope (14) of a corrosion-resistant material surrounded by said outer envelope and enclosing the interior (15) of the corrosion tester, said outer envelope being designed as an outer housing (12), into which an inner housing (14) forming the inner envelope is placed in floating manner and is connected to a first side panel (22) of the outer housing (12) with otherwise free movability relative both to the remaining side panels (18, 20, 26) and to the bottom and top panels (16, 28) of the outer housing, wherein the inner housing (14) is supported via its bottom panel (48) on board-like spacer elements (50, 52) kept apart from one another by interspaces (58, 60) and extending along the bottom side, and wherein the bottom panel (48) of the inner housing (14) consists of board elements (36, 38) connected using angled longitudinal and/or transverse rims (44, 46), where said angled longitudinal and/or transverse rims extend inside the interspaces (58, 60) between spacer elements (50, 52).

2. Corrosion tester according to claim 1,
wherein
the inner housing (14) consists of plastic, such as board elements (36, 38, 40, 42) consisting of GRP.

3. Corrosion tester according to claim 1,
wherein
the spacer elements (50, 52) consist of plastic, in particular of polyurethane hard foam.

4. Corrosion tester according to at least claim 3,
wherein
the spacer elements (50, 52) are fixed using retaining sections (54, 56), such as angled sections, connected to the bottom panel (16) of the outer housing (12) or inner housing (14).

5. Corrosion tester according to one of the preceding claims,
wherein
the bottom panel (48) is designed on the interior side as a plane surface.

6. Corrosion tester according to one of the preceding claims,
wherein
the inner housing (14) is connected on the top side by top suspensions (82, 84), e.g. threaded rods, to the top panel (28) of the preferably cuboid outer housing (12), where in particular the top suspensions (82, 84) are connected to outward-pointing angled edges of the board elements forming the top panel (68) of the inner housing (14).

7. Corrosion tester according to one of the preceding claims,
wherein
the interspace (86) between the outer and inner housings (12, 14) is filled with air, in particular dried air or compressed air is applied to it.

8. Corrosion tester according to one of the preceding claims,
wherein
the side panels (26, 70) both of the outer housing (12) and of the inner housing (14) opposite the first side panel (22), have closable passage openings (88, 90) aligned with one another.

9. Corrosion tester according to one of the preceding claims,
wherein
the first side panel (22) of the outer housing (12) and the side panel (74) of the inner housing (14) extending along it have openings (37) aligned with one another that are closable using a door element.

10. Corrosion tester according to claim 2,
wherein
at least the board elements (40, 42) forming the side panels (70, 72, 74, 76) and where necessary the top panel (28) and consisting of plastic have reinforcing sections, which are preferably angled sections, projecting beyond their outer surfaces.

11. Corrosion tester according to claim 2,
wherein
the board elements (36, 38, 40, 42) consisting of plastic have a thickness d of 3 mm ≤ d ≤ 7 mm.

12. Corrosion tester according to claim 9,
wherein
the inner housing (14) is connected to the outer housing (12) by its inner rim (66) surrounding the opening (37) in the first side panel (22).

13. Corrosion tester according to claim 12,
wherein
the board elements (36, 42) of the inner housing (14) adjacent to the opening (37) have angled edges (62, 64) extending along the inner rim (66) of the first side panel (22) of the outer housing (12), said inner rim forming a reveal.

14. Corrosion tester according to claim 13,
wherein
the angled edges extend between an angled section frame inserted into the reveal and said reveal and are connected to them.

## Revendications

1. Appareil de contrôle de la corrosion (10), comprenant une enveloppe extérieure thermo-isolée avec parois périphériques (18, 20, 22, 26), paroi de fond et paroi supérieure (16, 28) et une enveloppe intérieure (14) en matériau résistant à la corrosion, confinée dans ladite enveloppe extérieure et entourant l'espace intérieur (15) de l'appareil de contrôle de la corrosion, sachant que l'enveloppe extérieure est conçue sous forme de boîtier extérieur (12) dans lequel un boîtier intérieur (14) formant l'enveloppe intérieure est placé de manière à flotter, lequel boîtier intérieur est relié à une première paroi périphérique (22) du boîtier extérieur (12) tout en bougeant librement aussi bien par rapport aux parois périphériques restantes (18, 20, 26) que par rapport à la paroi de fond et à la paroi supérieure (16, 28) du boîtier extérieur, que le boîtier intérieur (14) s'appuie par le biais de sa paroi de fond (48) sur des entretoises (50, 52) en forme de plaquettes s'étendant du côté du fond et écartées les unes des autres par des espaces intermédiaires (58, 60) et que la paroi de fond (48) du boîtier intérieur (14) est constituée de plaquettes (36, 38) reliées par le biais de bords longitudinaux et/ou transversaux pliés (44, 46), sachant que les bords longitudinaux et/ou transversaux pliés s'étendent à l'intérieur des espaces intermédiaires (58, 60) entre les entretoises (50, 52).

2. Appareil de contrôle de la corrosion selon la revendication 1,
**caractérisé en ce**
**que** le boîtier intérieur (14) est constitué de plastique ainsi que de plaquettes (36, 38, 40, 42) en plastique renforcé de fibres de verre.

3. Appareil de contrôle de la corrosion selon la revendication 1,
**caractérisé en ce**
**que** les entretoises (50, 52) sont constituées de plastique, notamment de mousse rigide de polyuréthane.

4. Appareil de contrôle de la corrosion selon au moins la revendication 3,
**caractérisé en ce**
**que** les entretoises (50, 52) sont fixées au moyen de profilés de retenue (54, 56), tels que des profilés en équerre, reliés à la paroi de fond (16) du boîtier extérieur (12) ou du boîtier intérieur (14).

5. Appareil de contrôle de la corrosion selon une des revendications précédentes,
**caractérisé en ce**
**que** la paroi de fond (48) est conçue sous forme de surface plane du côté intérieur de l'espace.

6. Appareil de contrôle de la corrosion selon une des revendications précédentes,
**caractérisé en ce**
**que** le boîtier intérieur (14) est relié du côté supérieur à la paroi supérieure (28) du boîtier extérieur (12) présentant de préférence une forme parallélépipédique, par le biais de suspensions supérieures (82, 84) par ex. des tiges filetées, sachant que notamment les suspensions supérieures (82, 84) sont reliées aux pliures dirigées vers l'extérieur, 5 des plaquettes formant la paroi supérieure (68) du boîtier intérieur (14).

7. Appareil de contrôle de la corrosion selon une des revendications précédentes,
**caractérisé en ce**
**que** l'espace intermédiaire (86) entre le boîtier extérieur et le boîtier intérieur (12, 14) est rempli d'air, notamment alimenté en air asséché ou en air comprimé.

8. Appareil de contrôle de la corrosion selon une des revendications précédentes,
**caractérisé en ce**
**que** la paroi périphérique (26, 70) en face de la première paroi périphérique (22) du boîtier extérieur (12) ainsi que celle du boîtier intérieur (14) présentent des orifices de passage (88, 90) refermables et disposés alignés les uns par rapport aux autres.

9. Appareil de contrôle de la corrosion selon une des revendications précédentes,
**caractérisé en ce**
**que** la première paroi périphérique (22) du boîtier extérieur (12) et la paroi périphérique (74) du boîtier intérieur (14), s'étendant le long de la première paroi périphérique présentent des orifices (37) alignés les uns par rapport aux autres qui sont refermables par un élément à porte.

10. Appareil de contrôle de la corrosion selon la revendication 2,
**caractérisé en ce**
**qu'**au moins les plaquettes (40, 42) constituées de plastique et formant les parois périphériques (70, 72, 74, 76) et le cas échéant celles formant la partie supérieure (28) présentent des profilés de renforcement en saillie au-dessus de leurs surfaces extérieures, lesquels profilés sont de préférence des profilés en équerre.

11. Appareil de contrôle de la corrosion selon la revendication 2,
**caractérisé en ce**
**que** les plaquettes constituées de plastique (36, 38, 40, 42) présentent une épaisseur d telle que 3 mm ≤ d≤ 7 mm.

12. Appareil de contrôle de la corrosion selon la revendication 9,
**caractérisé en ce**
**que** le boîtier intérieur (14) est relié au boîtier extérieur (12) par l'intermédiaire de son bord intérieur (66) entourant l'orifice (37) dans la première paroi périphérique (22).

13. Appareil de contrôle de la corrosion selon la revendication 12,
**caractérisé en ce**
**que** les plaquettes (36, 42) du boîtier intérieur (14), avoisinant l'orifice (37) présentent des replis (62, 64) qui s'étendent le long du bord intérieur (66) formant un intrados, de la première paroi périphérique (22) du boîtier extérieur (12).

14. Appareil de contrôle de la corrosion selon la revendication 13,
**caractérisé en ce**
**que** les replis s'étendent entre un cadre de profilés en équerre placé dans l'intrados et l'intrados, et sont reliés à ceux-ci.
